# EUROPÄISCHE PATENTSCHRIFT

(11) **EP 2 650 850 B1**
(45) Veröffentlichungstag und Bekanntmachung des Hinweises auf die Patenterteilung: **01.08.2018**
(21) Anmeldenummer: 13153527.0
(22) Anmeldetag: 31.01.2013
(51) Int. Cl.: G08B 13/196, G06K 9/00

(54) **Vorrichtung zur Steuerung eines Gebäudeaggregats**
Device for controlling a building unit
Dispositif de commande d'un module de bâtiment

(30) Priorität: 12.04.2012 DE 102012103163
(43) Veröffentlichungstag der Anmeldung: 16.10.2013
(73) Patentinhaber: Steinel GmbH, 33442 Herzebrock (DE)
(72) Erfinder: Steinel, Ingo Heinrich, 33442 Herzebrock-Clarholz (DE)
(74) Vertreter: Patentanwälte Behrmann Wagner PartG mbB

(56) Entgegenhaltungen:
- EP-A1- 1 061 487
- DE-A1-102006 048 166
- US-A1- 2004 258 279

## Beschreibung

Die vorliegende Erfindung betrifft eine Vorrichtung zur Steuerung eines Gebäudeaggregats nach dem Oberbegriff des Hauptanspruchs.

Eine derartige Vorrichtung, etwa in Form einer Beleuchtungssteuerungsvorrichtung oder einer Steuerungsvorrichtung für ein Klimaaggregat als Gebäudeaggregat, ist aus dem Stand der Technik allgemein bekannt und bezweckt, die jeweilige Funktion bzw. den Betriebszustand des betreffenden Gebäudeaggregats davon abhängig zu machen, ob ein Erfassungsobjekt, etwa eine von dem Betriebszustand des Gebäudeaggregats betroffene Person, sich in dem Erfassungsbereich der Anwesenheitserfassungsmittel aufhält. Dies bewirkt etwa bei einer bekannten Lichtautomationsvorrichtung, dass - energiesparend - die angesteuerte Leuchtenvorrichtung als mögliches Gebäudeaggregat nur dann betrieben wird, wenn sich das Anwesenheitsobjekt im Erfassungsbereich tatsächlich aufhält.

Nicht nur das zunehmende Bedürfnis nach energieeffizientem Betrieb von Gebäudeaggregaten, auch zahlreiche weitere Komfort- und Bedienungsverbesserungen von Gebäudeaggregaten lassen daher das Bedürfnis nach zunehmend leistungsfähigeren, gleichzeitig betriebssicheren Steuerungsmitteln entstehen.

Aus dem Stand der Technik ist es bekannt, Sensormittel zur Bewegungserfassung in Form verschiedener Erfassungstechnologien und -prinzipien einzusetzen. So ist es etwa zur Bewegungserfassung im Bereich der Beleuchtungssteuerung bekannt und etabliert, sog. PIR- (Passiv-Infrarot) Sensoren einzusetzen, welche auf der Basis detektierter Infrarotstrahlung im Erfassungsbereich (genauer: einer sich etwa durch die Bewegung des zu detektierenden Objekts ändernden Infrarotstrahlung) ein Erfassungssignal ausgeben. Alternative, vergleichbare Technologien sind sog. Hochfrequenz- bzw. Radar-Sensortechnologien, welche auf der Basis von Änderungen reflektierter und detektierter Hochfrequenzwellen arbeiten, wiederum alternativ und zur Bewegungserfassung bekannt sind Ultraschall-basierte Sensormittel.

All diese bekannten Sensortechnologien sind jedoch in ihrer Wirkungsweise zunächst Bewegungssensoren, d.h. sie reagieren primär auf eine Bewegung eines zu erfassenden Objekts (also etwa einer Person), mit zugehörigen, Messprinzipbedingten Besonderheiten: So zeichnet sich etwa die auch in der Großserie eingesetzte und bewährte PIR-Bewegungserfassungstechnologie dadurch aus, dass eine Detektorempfindlichkeit (und damit auch eine Erfassungsempfindlichkeit) u.a. davon abhängig ist, in welcher (Bewegungs-) Richtung sich das zu erfassende Objekt relativ zum Sensor bewegt. Entsprechendes gilt für die bekannten, typischerweise auf dem Doppler-Prinzip-basierenden HF- bzw. Radar-Sensoren. Bei letzteren kommt gerade bei ausgedehnten Erfassungsbereichen das Problem hinzu, dass auch potentiell weit entfernte oder hinter Barrieren (wie etwa Wänden) erfolgende Bewegungen von Objekten, oftmals unerwünscht, detektiert werden und eine Reaktion des Gebäudeaggregats auslösen.

Häufig gewünscht, gerade im skizzierten Gebäudekontext, ist es jedoch, unabhängig von einer Bewegungsgeschwindigkeit und/oder Bewegungsrichtung eines zu erfassenden Objekts festzustellen, ob sich dieses Objekt in einem klar abgrenzbaren Erfassungsbereich befindet. Traditionelle, bewegungsbasierte Sensormittel versuchen dies durch eine entsprechend empfindliche Auslegung bzw. Kalibrierung der skizzierten Sensortechnologien zu realisieren, so dass die "Anwesenheitserfassung" bekannter Sensormittel dadurch realisiert wird, dass etwa von einem menschlichen, wenig beweglichen Objekt gleichwohl die gelegentlichen, unvermeidlichen Bewegungen erfasst und in das Anwesenheitssignal umgesetzt werden. Mit anderen Worten, traditionelle Anwesenheitserfassungsmittel sind tatsächlich geeignet empfindliche Bewegungssensormittel. Eine solche Vorgehensweise bringt jedoch nicht nur erhebliche Kalibrierungsprobleme mit sich, da etwa eine Abgrenzung zu anderen, nicht zu detektierenden Objekten (z.B. sich mit geringen Bewegungsamplituden bewegliche Vorhänge in einem Büro-Erfassungsbereich) praktisch unmöglich ist. Auch erhöht die skizzierte Richtungsabhängigkeit einer bekannten Bewegungssensorik die Komplexität einer solchen Vorgehensweise.

Damit besteht in Abkehr von der als empfindlicher Bewegungserfassung traditionell realisierten Anwesenheitserfassung das Bedürfnis nach einer tatsächlichen Erfassung einer Anwesenheit eines Anwesenheitsobjektes (als Erfassungsobjekt) im Erfassungsbereich, unabhängig von dessen Bewegung. Der prinzipiell mögliche Gedanke, zu diesem Zweck etwa mit ansonsten bekannten Technologien des digitalen Datenvergleichs Bilder zwischen verschiedenen Anwesenheitszuständen zu vergleichen; einerseits das Bild des Erfassungsbereichs ohne Erfassungsobjekt, andererseits das Bild des Erfassungsbereichs mit Erfassungsobjekt; bietet sich zunächst als einfach erscheinende Lösung an, führt jedoch in der Praxis zu zahlreichen Problemen, insbesondere angesichts des Umstandes, dass ein für eine Gebäudeaggregats-Automation relevanter Erfassungsbereich sich durch verschiedene, darin befindliche und nicht für die Anwesenheitserfassung relevante Bildkomponenten ändert, so dass ein konkretes Problem beim Bildvergleich nicht in dem technischen Abgleich bzw. der Ermittlung eines Unterschieds zwischen einem aktuell erfassten und einem Referenzbild liegt, sondern darin, welche Abbildung bzw. welche Bilddaten tatsächlich als Referenzbild herangezogen werden. Beispielhaft sei dies dadurch illustriert, dass etwa in einem Bürokontext als Erfassungsbereich bereits ein verschobener Schreibtischstuhl oder ein zusätzlich angeordneter Blumentopf eine signifikante Veränderung eines (zum Vergleich mit einem eine Person aufweisenden) aktuellen Erfassungsbildes bedeuten kann, so dass dann selbst bei Abwesenheit der Person ein Änwesenheitserfassungssignal erzeugt werden kann und mithin das Gebäudeaggregat in einer nicht gewünschten Weise aktiviert oder deaktiviert wird. Auch ist eine solche, auf einer Bildanalyse eines (typischerweise einzelnen) Bildes (dann im Vergleich mit einem Referenzbild) basierende Vorgehensweise nicht beliebig flexibel einsetzbar, etwa im Hinblick auf eine häufig gewünschte Erfassung etwa einer Mehrzahl von anwesenden Personen als Erfassungsobjekt.

Aus der EP 1 061 487 A1 ist eine Vorrichtung zur Steuerung eines Gebäudeaggregats nach dem Oberbegriff des Hauptanspruchs bekannt. Insbesondere zeigt diese Druckschrift Anwesenheitserfassungsmittel als zweistufige Vorrichtung, wobei in einer ersten Stufe ein Signal über eine Abstandsermittlung zum Objekt gewonnen wird und das Objekt mit zwei Bildaufnahmeeinheiten erfasst wird.

In einer zweiten Stufe wird anschließend eine Bildanalyse als Vergleich mit einem vorher abgespeicherten Bild vorgenommen.

Aufgabe der vorliegenden Erfindung ist es daher, eine als gattungsbildend vorausgesetzte, an eine Bilderfassungseinheit als Anwesenheitserfassungsmittel aufweisende Vorrichtung zur Steuerung eines Gebäudeaggregats einerseits im Hinblick auf ihre Detektions- und Erfassungseigenschaften, insbesondere eine Verminderung von Fehldetektionen und eine vereinfachte Anpassbarkeit an

Änderungen oder nicht-detektionsrelevante Einflüsse im Erfassungsbereich, andererseits im Hinblick auf ihre Eignung zur Erzeugung weiterer potentiell steuerungsrelevanter Parameter (wie etwa einer Personenanzahl) zu verbessern, wobei insbesondere eine Vorrichtung zu schaffen ist, welche sich für verschiedenste Gebäude- bzw. Gebäudeinfrastruktur-relevante Steuer- und Automatisierungsvorgänge eignet, bei welchen zuverlässig die Anwesenheit eines Anwesenheitsobjekts (typischerweise einer oder mehrerer Personen) in einem vorbestimmten oder vorbestimmbaren Erfassungsbereich ermöglicht ist. Dabei soll insbesondere eine Bewegung, Bewegungsrichtung oder Bewegungsgeschwindigkeit des Erfassungsobjekts keinen Einfluss auf die Anwesenheitserfassung haben.

Die Aufgabe wird durch die Vorrichtung mit den Merkmalen des Hauptanspruchs gelöst; vorteilhafte Weiterbildungen der Erfindung sind in den Unteransprüchen beschrieben. Während zudem die vorliegende Erfindung, zusätzlich erläutert anhand des nachfolgenden Ausführungsbeispiels, sich primär in einer strukturell definierten Erzeugnisform als Anspruchsgattung findet, soll im Rahmen der vorliegenden Erfindung gleichwohl ein Verfahren, welches die Funktionalitäten der Erzeugniskomponenten (entsprechend den Anspruchsmerkmalen) beschreibt und insoweit den Betrieb der erfindungsgemäßen Vorrichtung wiedergibt, als gleichermaßen zur Erfindung gehörig offenbart gelten.

In erfindungsgemäß vorteilhafter Weise ist zur Realisierung der erfindungsgemäßen Bilderfassungseinheit eine Mehrzahl von voneinander beabstandeten und auf den gemeinsamen Erfassungsbereich gerichteter Bildaufnahmeeinheiten vorgesehen, um insoweit, in der Art ansonsten bekannter Stereo-Bildaufnahmeinfrastrukturen, eine zusätzliche Tiefendimension in der Bilderfassung zu erhalten.

Weiterhin vorteilhaft sind die den mindestens zwei Bildaufnahmeeinheiten nachgeschalteten Bildanalysemittel so ausgebildet, dass diese aus einem Vergleich von Bildteilinformationen (welche etwa Objekten im Erfassungsbereich entsprechen) die Bildaufnahmeeinheiten Abstandsinformationsdaten (dieser Bildteile) erzeugen, welche einem Abstand der betreffenden Objekte von der Bilderfassungseinheit entsprechend. Mit anderen Worten, durch Vergleich von (idealerweise zeitlich synchron erzeugten) Einzelbildern der mindestens zwei Bildaufnahmeeinheiten lässt sich zunächst feststellen, welche Abweichung (Deviation) zwischen einem Objekt im Erfassungsbereich und dessen zugehörigem Bild (Bildteil) im jeweiligen Einzelbild vorliegt; je nach Ausrichtung der Bildaufnahmeeinheiten wächst etwa diese Deviation mit abnehmendem Abstand von der Bilderfassungseinheit. Da jedoch erfindungsgemäß die mindestens zwei Bildaufnahmeeinheiten um einen (bekannten) Abstand voneinander beabstandet sind, lässt sich durch ansonsten bekannte Methoden der Triangulation im Hinblick auf die betrachteten Objekte im gemeinsamen Erfassungsbereich feststellen, welchen Abstand diese Objekte von der Bilderfassungseinheit aufweisen. Diese Daten werden als Abstandsinformationen den jeweiligen Objekten (bzw. den zugehörigen Bildteilen bzw. Bildteildaten) zugeordnet, wobei eine typische Realisierungsform das Gesamtbild (genauer: alle jeweiligen Einzelbilder) in der Art einer Tabelle erfasst und geeignet zwischenspeichert.

Diese erfindungsgemäß erzeugte Abstandsinformation (Abstandsinformationsdaten) ermöglicht es dann vorteilhaft, in der Art einer Vorder-/Hintergrundunterscheidung gewisse Bildkomponenten aus dem durch die Bildaufnahmeeinheiten aufgenommenen Erfassungsbereich auszublenden; vorteilhaft im Rahmen der Erfindung geschieht dies dadurch, dass etwa lediglich diejenigen Objekte betrachtet (und in nachfolgend zu erläuternder Weise weiterverarbeitet) werden, welche einen maximalen Abstand von der Bilderfassungseinheit aufweisen. In alternativer (bzw. überlagerter) Realisierung kann dies auch dadurch erreicht werden, dass etwa zum Hintergrund gehörig erkannte Objekte (welche etwa einen vorbestimmten Abstand zur Bilderfassungseinheit überschreiten) bei der nachfolgenden Verarbeitung unberücksichtigt bleiben. In der praktischen Realisierung lässt sich auf diese Weise etwa in einem Gebäudekontext und bei Montage der Bilderfassungseinheit in einem Deckenbereich eines Raums ein Fußboden bzw. Fußbodenbereich als Hintergrund ausblenden (da außerhalb eines maximal vorzugebenden Abstands liegend), während etwa auf dem Fußboden stehende Personen, zumindest mit ihren oberen Körperteilen, als erfassungsrelevante Objekte (Vordergrund) bewertet und nachfolgend rechnerisch weiterverarbeitet werden.

Weiter erfindungsgemäß sind den ersten Bildanalysemitteln zweite Analysemittel nachgeschaltet, welche ausgebildet sind, die als zum Vordergrund gehörigen Objekte (bzw. die zugehörigen Bildteilinformationen bzw. Teilbilddaten) weiterzuverarbeiten, insbesondere diese Informationen dahingehend zu untersuchen, ob es sich tatsächlich um erfassungsrelevante und damit für das Erzeugen des Anwesenheitserfassungssignals bestimmte Erfassungsobjekte (etwa Personen) handelt. Zu diesem Zweck erfolgt erfindungsgemäß mittels der zweiten Bildanalysemittel ein Vergleich dieser Bildteildaten (ergänzend oder alternativ etwa auch von geeignet einer Segmentierung oder dergleichen Bildaufbereitung unterzogenen und im Hinblick auf ihren Abstand klassifizierten Daten der aufgenommenen Bilder) mit vorbestimmten Bildmusterdaten, welche bevorzugt in Form von typischen, dem zu detektierenden Anwesenheitsobjekt entsprechenden Mustern geeignet gespeichert vorliegen. Im Rahmen der Erfindung erzeugen die zweiten Bildanalysemittel als Ergebnis dieses Vergleichs ein Übereinstimmungssignal, welches günstig einen Grad einer Übereinstimmung zwischen den zu vergleichenden Daten (Datensätzen) wiederspiegelt, und etwa bei Überschreiten eines vorbestimmten Schwellwerts wird dann das Anwesenheitserfassungssignal zum Aktivieren, Deaktivieren bzw. Verändern des Betriebsmodus des vorgesehenen Gebäudeaggregats erzeugt.

Damit realisiert die vorliegende Erfindung im besonderen Kontext der Steuerung eines Gebäudeaggregats in überraschend einfacher, im Hinblick auf eine Anwesenheitsdetektion erkennungs- und betriebssicherer Weise ein Anwesenheitserfassungssignal, welches sich günstig für eine Vielzahl von Steuerungsaufgaben, auch über die als gattungsbildend herangezogene Lichtautomation hinaus, eignet. So hat es sich etwa im Rahmen der Erfindung als besonders günstig und bevorzugt herausgestellt, eine solche erfindungsgemäße Vorrichtung zur Steuerung von verschiedenen Lift- bzw. Aufzugfunktionalitäten (mit dem Aufzug bzw. dessen Steuerungsinfrastruktur als Gebäudeaggregat) heranzuziehen, wobei es besonders günstig ist, mit der vorliegenden Erfindung etwa die Anwesenheit einer oder mehrerer Personen als Anwesenheitsobjekt vor einer Fahrstuhltür, in einer Fahrstuhlkabine oder in einem anderen, steuerungsrelevanten Erfassungsbereich einzusetzen. Damit ermöglicht es dann die vorliegende Erfindung besonders günstig und elegant, etwa ein aktuelles Betriebsverhalten einer Aufzugskabine von detektierten, anwesenden Personen vor einer Fahrstuhltür eines vorbestimmten Stockwerks als Liftposition abhängig zu machen; wird etwa erfindungsgemäß erfasst, dass eine wartende Personenzahl eine aktuelle Beförderungskapazität einer bereits (ganz oder teilweise) gefüllten Aufzugkabine übersteigt, würde bei einem Fahrtzyklus dieser Aufzughalt übersprungen und eine nachfolgende, geeignet leere Fahrtaufzugkabine an diese Position verbracht. Gleichermaßen könnte etwa eine (innerhalb oder außerhalb der Aufzugkabine vorzusehende) Anwesenheitserfassung im Rahmen der Erfindung unnötige Betriebsvorgänge, etwa bei leerer Aufzugkabine, unterbinden, ergänzend oder alternativ als Reaktion auf eine große erfasste Personenanzahl (und etwa im Rahmen einer Parallel-Aufzugs-Infrastruktur) eine Mehrzahl von Aufzugkabinen gleichzeitig zum gewünschten Einstiegsort verbringen, oder nahezu jede beliebige andere Funktionalität ansteuern oder auslösen, für welche eine Anwesenheitserfassung nützliche Sensorparameter anbietet. Auch könnte in diesem Zusammenhang etwa eine weiterbildungsgemäß und vorteilhaft mögliche Abstandserfassung (im zu erfassenden Erfassungsbereich) Rückschlüsse darüber zulassen, ob etwa eine entfernt detektierte Person tatsächlich für die Aufzuganlage Betriebsmodus-relevant ist.

Derartige Gedanken und weitere Steuerungsoptionen lassen sich dann erfindungsgemäß auch auf die weiteren bevorzugten (jedoch nicht ausschließlich beanspruchten) Einsatzgebiete ausdehnen und übertragen; so bietet insbesondere auch die durch die vorliegende Erfindung einfach ermöglichte Anwesenheitsdetektion zahlreiche Möglichkeiten zur Beleuchtungs-, Klima- und/oder Belüftungssteuerung, etwa in Abhängigkeit von einer detektierten Personenanzahl, jeweiligen Personenposition oder dergleichen. Auch ermöglicht etwa die erfindungsgemäße Abgrenzung von nicht-detektionsrelevanten Hintergrund-Bildobjekten von detektionsrelevanten Vordergrund-Bildobjekten eine Unterscheidung etwa zwischen Haustieren und Personen; durch geeignete Festlegung eines Abstands-Schwellwerts würden insbesondere erstere (da typischerweise näher am Fußboden befindlich) bei einer im Deckenbereich montierten Bilderfassungseinheit zuverlässig ausgeblendet werden können und nicht in unbeabsichtigter Weise die Funktion des Gebäudeaggregats auslösen.

Dabei ist es weiterbildungsgemäß bevorzugt, durch eine möglichst vielfältige Anzahl verschiedener vorbestimmter (und bevorzugt gespeicherter) Bildmusterdaten für die Vergleichsfunktionalität der zweiten Bildanalysemittel die Detektionsbreite der vorliegenden Erfindung zu erhöhen. Indem etwa auch geeignete Muster für verschiedene Konstellationen einer Mehrzahl von Personen im Erfassungsbereich in Form der Bildmusterdaten vorgegeben und geeignet gespeichert sind (kleine Gruppen, große Gruppen, voneinander beabstandete Einzelpersonen usw.), lassen sich dann entsprechende Erkenntnisse aus diesem Vergleich, insbesondere etwa einem einem Muster zugehörigen Übereinstimmungssignal, erzeugen und entsprechend dem detektierten Erfassungszustand eine angepasste Ansteuerung des Gebäudeaggregats vornehmen.

Im Rahmen bevorzugter Weiterbildungen der Erfindung sind Einrichte- und Trainingsmittel vorgesehen, welche, geeignet den ersten und/oder zweiten Bildanalysemitteln zugeordnet, eine Anpassung an die Verhältnisse am Einsatzort ermöglichen, etwa durch Erfassung bzw. Einstellung der gewünschten geometrischen Verhältnisse, eines Abstandes zum (typischerweise als Hintergrund auszublendenden) Fußbodens bei im oberen Wand- bzw. Deckenbereich anzuordnender Bilderfassungseinheit. Auch lässt sich durch geeignete Einrichte- und Trainingsmittel, etwa in Form einer datenmäßigen oder ferngesteuerten Vorgabe, ein Erfassungsbereich begrenzen, und es lassen sich für einen Einsatzzweck geeignete Bildmusterdaten laden, erzeugen oder auf andere geeignete Weise heranführen.

Im Ergebnis ermöglicht die vorliegende Erfindung das Realisieren neuer und potentiell komfortabler, sicherer und energiesparender Betriebsmodi für eine Vielzahl von Gebäudeaggregaten. Dabei bietet insbesondere der Einsatzkontext "Aufzugs- und Liftbetrieb" neue und bislang nicht oder nur mit großen Schwierigkeiten mögliche Steuerungsfunktionalitäten, die vorliegende Erfindung ist jedoch nicht auf diesen Einsatzkontext beschränkt. Vielmehr eignet sich die vorliegende Erfindung vorteilhaft für nahezu beliebige Steuerungsfunktionalitäten eines Gebäudeaggregats, bei welchem zuverlässig eine Anwesenheitserfassung in einem Erfassungsbereich vor der Bilderfassungseinheit durchzuführen ist.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig. 1: ein schematisches Blockschaubild mit wesentlichen Funktionskomponenten der erfindungsgemäßen Vorrichtung zur Steuerung eines Gebäudeaggregats gemäß einem ersten bevorzugten Ausführungsbeispiel, wobei das Gebäudeaggregat eine Aufzugsteuerung darstellt;
- Fig. 2: eine schematische Illustration eines Erfassungsbereichs mit Anwesenheitsobjekt und deckenseitig vor einer Aufzugtür montierter Vorrichtung zur Steuerung gemäß Fig. 1, zum Illustrieren des gezeigten Einsatzkontextes, und
- Fig. 3: eine Schemadarstellung zum Verdeutlichen von (geeignet segmentierten) Teilbildern eines im Kontext der Fig. 1, Fig. 2 erfassten Objektes im Vergleich mit vorbestimmten Bildmusterdaten als Grundlage für das Erzeugen des Anwesenheitserfassungssignals.

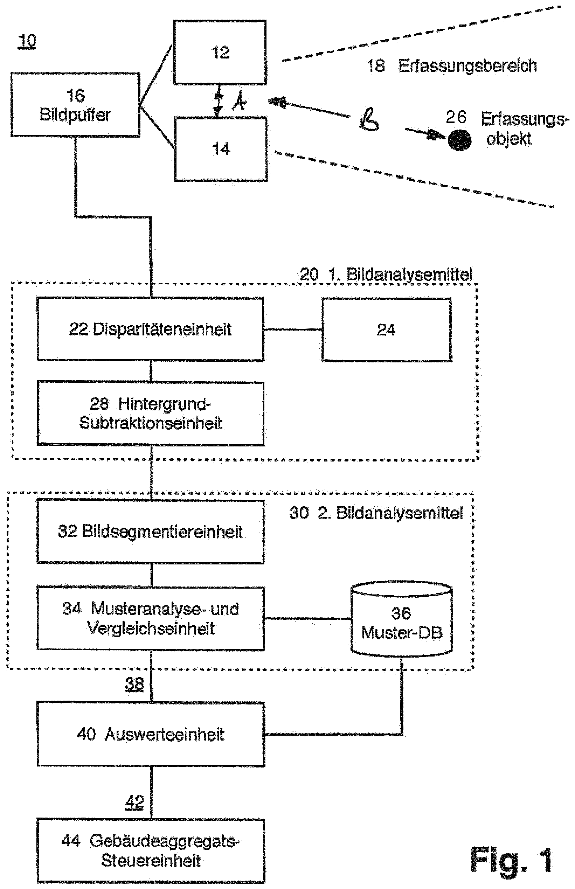

Die Fig. 1 verdeutlicht in Form eines Blockschaltbilds wesentliche Funktionskomponenten der erfindungsgemäßen Vorrichtung zur Steuerung eines Gebäudeaggregats gemäß einem ersten bevorzugten Ausführungsbeispiel der vorliegenden Erfindung.

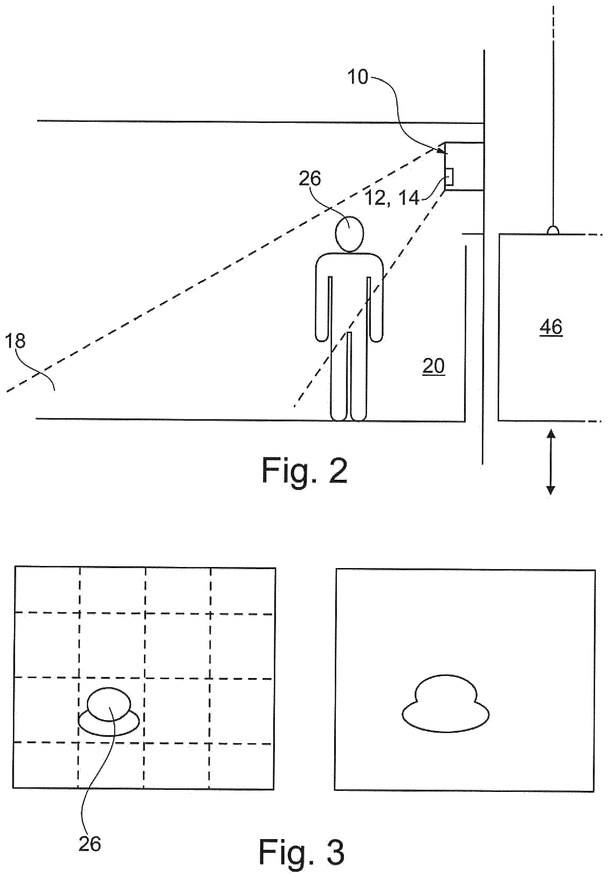

Eine Bilderfassungseinheit 10 weist ein Paar von jeweils digitale Kameramittel aufweisenden Bildaufnahmeeinheiten 12, 14 auf, welche mit einer nachgeschalteten Bildpuffereinheit 16 verbunden und auf einen gemeinsamen Erfassungsbereich 18 (etwa einen Bereich vor einer Aufzugtür in einem Gebäude) gerichtet sind. Wie die Fig. 2 verdeutlicht, ist die Bilderfassungseinheit 10 geeignet im Deckenbereich oberhalb einer Aufzugtür montiert.

Das Paar von durch die Einheiten 12, 14 erzeugten aufgenommenen Bildern des Erfassungsbereichs 18 in Form von Bilddaten geeigneten Formats wird verarbeitet durch erste Bildanalysemittel 20, welche der Bildpuffereinheit 16 nachgeschaltet sind. Diese ersten Bildanalysemittel weisen zunächst eine Bild-Disparitäteneinheit 22 auf, welche das Paar von Bildern zergliedert und die Bildteile miteinander datenmäßig vergleicht. Insbesondere der Disparitäteneinheit zugeordnete Tabellenmittel 24 kartieren dann für jedes so erzeugte Segment (Teilbild) des Erfassungsbereichs 18, inwieweit die jeweiligen Einzelbilder der voneinander um den Abstand A beabstandeten Kameraeinheiten 12, 14 aufgenommenen Bilder übereinstimmen. Entsprechend einem Objektabstand eines zu erfassenden Objekts (hier etwa ein Personenkopf 26) und dessen Abstand B zum Paar von Bildaufnahmeeinheiten 10, 12 variiert der (Teil-) Bildunterschied in Abhängigkeit von einer jeweiligen Entfernung B, insoweit entsprechend dem bekannten Parallaxeneffekt in der Fotografie.

Der bekannte Abstand A und eine jeweilige Lokalisierung des Objekts 26 in den Einzelbildern ermöglicht es gleichwohl der Disparitäteneinheit 22, diesem Teilbild eine dem zugehörigen Abstand B entsprechende Abstandsinformation in Form von Abstandsinformationsdaten zuzuordnen und ebenfalls geeignet etwa in der Tabelle 24 abzulegen.

Liegt nunmehr, etwa durch (nicht gezeigte) vorbestimmte Schwellwertdaten, ein Maßstab darüber vor, bis zu welchem Abstandsmaß Objekte in der Anwesenheitserfassung zu berücksichtigen sind, ist eine Hintergrund-Subtraktionseinheit 28 der ersten Bildanalysemittel 20 eingerichtet, eine Reduktion des von den Einheiten 12, 14 erzeugten Doppelbildes lediglich auf solche Bildteile (Objekte) vorzunehmen, welche innerhalb des gewünschten Abstandsbereichs liegen. Auf diese Weise ist es erfindungsgemäß möglich, den für eine nachfolgende, in zweiten Bildanalysemitteln 30 vorzunehmende Bilddetektion notwendigen Rechenaufwand drastisch zu reduzieren.

In den gemäß Fig. 1 den ersten Bildanalysemitteln 20 nachgeschalteten zweiten Bildanalysemitteln 30 wird, entsprechend etwa einer aus einem der vorgeschalteten Bearbeitungsstufe resultierenden Teilbild, welches innerhalb der Entfernungsgrenze liegt (und insoweit als zum relevanten Vordergrund gehörig gilt) eine geeignete Bildsegmentierung vorgenommen, etwa entsprechend einer wahrgenommenen Bildkontur. Fig. 3 zeigt eine derartige Konturierung, in der Perspektivdarstellung insoweit entsprechend etwa einem menschlichen Kopf. Zu diesem Zweck ist den zweiten Bildanalysemitteln die Bildsegmentiereinheit 32 zugeordnet, deren Ausgangssignal wiederum einer nachgeschalteten Musteranalyse- und Vergleichseinheit 34 anliegt, welche mit einer Musterdatenbank 36 für vorbestimmte Bildmusterdaten (insoweit entsprechend Erwartungsbilddaten bzw. zu detektierenden Positivwerten) entspricht. Genauer gesagt führt die Musteranalyse- und Vergleichseinheit 34 einen Vergleich mit den durch die Bildsegmenteinheit 32 erzeugten Segmentdaten (Fig. 3 links) mit gespeicherten Bildmusterdaten der Dateneinheit 36 (Fig. 3 rechts) durch und erzeugt als Ergebnis dieses Vergleichs ein Übereinstimmungssignal 38, welches für eines oder eine Mehrzahl von als (zumindest teilweise bzw. mit einer bestimmten Wahrscheinlichkeit detektierte) Übereinstimmung mit den Musterdaten 36 einer nachgeschalteten Auswerteeinheit 40 anliegt. Die Auswerteeinheit 40 stellt nunmehr fest, welcher Art das aus den ersten Bildanalysemitteln 20 gewonnene bzw. durch die Segmentiereinheit 22 aufbereitete Teilbild ist, insbesondere, ob die ermittelte Wahrscheinlichkeit zur Detektion einer Person ausreicht, und ob es sich ggf. um eine Mehrzahl von Personen handelt, wo die Person(en) sich im Erfassungsbereich befinden oder dergleichen. Maßgeblich für eine solche Funktionalität sind die in der Datenbankeinheit 36 vorbestimmten bzw. gespeicherten Vergleichsdaten, welche, wie oben dargelegt, etwa als vorbestimmter bzw. geeignet zu aktualisierender Datensatz vorliegen bzw. auch im Rahmen eines Lehr-, Einrichte- oder Trainingsmodus geeignet in Form von Positiv- und/oder Negativeingaben an die zweiten Bildanalysemittel vorbestimmt werden können.

Erfindungsgemäß ist die Auswerteeinheit 40 ausgebildet, aus dem Vergleichsergebnis und ggf. weiteren Parametrisierungen ein Anwesenheitserfassungssignal 42 für eine nachgeschaltete Gebäudeaggregats-Steuereinheit 44 zu erzeugen, welche etwa im gezeigten Ausführungsbeispiel die Steuerung der in Fig. 2 lediglich schematisch gezeigten Aufzugkabine 46 realisiert oder unterstützt.

Am beschriebenen Ausführungsbeispiel der Fig. 1 - 3 ist der Betrieb etwa wie folgt: Vor der Aufzugkabine befindet sich das zu detektierende Anwesenheitsobjekt in Form der Person 26, im vorgesehenen Erfassungsbereich 18. Zweck der erfindungsgemäßen Steuerungsfunktionalität ist es hier auch, vor einem Halt einer sich in Vertikalrichtung hinter der Aufzugtür 46 bewegenden (nicht gezeigten) Aufzugkabine festzustellen, ob überhaupt eine Person vor der Aufzugtür steht. Durch diese Maßnahmen werden etwa unnötige bzw. unbeabsichtigte Halte- und Öffnungsvorgänge vermieden (was etwa bei Betriebszustandssituationen auftritt, bei welchen eine Person zwischenzeitlich etwa eine andere, parallele Aufzugkabine oder eine Treppe zur Fortbewegung gewählt hat und sich, trotz aktivierten Aufzugrufes, tatsächlich nicht mehr vor einer Aufzugtür befindet).

Im beschriebenen Ausführungsbeispiel würde nunmehr durch die Bildaufnahmeeinheiten 12, 14, mit entsprechender Parallaxe bezogen auf das Objekt 26, ein Bildpaar erzeugt werden (in der Praxis der Erfindung und in typischer Weiterbildung tatsächlich ein periodisches bzw. kontinuierlich aufgenommenes Bild) und durch die ersten Bildaufnahmemittel 20 ausgewertet. Bei geeigneter Einstellung erzeugt die Hintergrund-Subtraktionseinheit 28 aus der Vielzahl von in der Tabelleneinheit 24 durch die Disparitäteneinheit 22 eingetragenen Datenobjekten (insoweit entsprechend Teilbildern) einen dem Objekt 26 entsprechenden Datensatz, nämlich dadurch, dass eine Unterscheidung (Subtraktion) von nicht-relevanten Hintergrunddaten, wie etwa einem Fußbodenmuster, einer Fußleiste oder dergleichen Daten von dem objektbezogenen Datensatz erfolgt.

Die nachgeschalteten zweiten Bildanalysemittel 30 erzeugen das in der Fig. 3 links gezeigte Bild in Form einer Fleckdarstellung, welche durch die nachgeschaltete Musteranalyse- und Vergleichseinheit 34 mit Einträgen der Musterdatenbank 36 verglichen wird. Da entsprechend der aktuellen Position der Person im Erfassungsbereich 18 eine (geeignet tolerierte) Übereinstimmung mit einem vorbestimmten Bildmuster der Datenbankeinheit 36 festgestellt wird, führt dies in der Auswerteeinheit 40 zu dem Schluss, dass eine Einzelperson vor dem Aufzug steht. Dies ermöglicht dann, dass die Fahrstuhlkabine an die Position der Aufzugtür 46 zur Aufnahme der Person 26 herangeführt wird.

Die vorliegende Erfindung ist weder auf das beschriebene Ausführungsbeispiel, noch den beschriebenen Anwendungskontext "Aufzugbetrieb" beschränkt, auch wenn sich dieser in besonders günstiger Weise zur Realisierung der Erfindung eignet. Vielmehr lassen sich zahlreiche Steuerungsaufgaben im Bereich von Gebäudeaggregaten durch die vorliegende Erfindung kreativ, konstruktiv einfach und dabei gleichzeitig betriebssicher umsetzen.

## Patentansprüche

1. Vorrichtung zur Steuerung eines Gebäudeaggregats mit
Anwesenheitserfassungsmitteln (10,12,14) und als Reaktion auf ein Anwesenheitserfassungssignal (42) der Anwesenheitserfassungsmittel zum Aktivieren, Deaktivieren und/oder Verändern eines Betriebsmodus des Gebäudeaggregats ausgebildeten Gebäudeaggregatsteuermitteln (44), wobei die Anwesenheitserfassungsmittel eine auf einen Erfassungsbereich (18) gerichtete oder richtbare Bilderfassungseinheit (12,14) sowie eine das Anwesenheitserfassungssignal als Reaktion auf ein im Erfassungsbereich erfasstes Anwesenheitsobjekt erzeugende Auswerteeinheit aufweisen, dass die Bilderfassungseinheit mindestens zwei um einen vorbestimmten Abstand (A) voneinander beabstandete und auf den gemeinsamen Erfassungsbereich gerichtete oder richtbare Bildaufnahmeeinheiten (12,14) aufweist,
den Bildaufnahmeeinheiten erste Bildanalysemittel (20) nachgeschaltet sind, die so ausgebildet sind, dass aus einem Vergleich von Objekten im Erfassungsbereich entsprechenden Bildteilinformationen der Bildaufnahmeeinheiten Abstandsinformationsdaten erzeugt werden, die einem Abstand (B) der jeweiligen Objekte von der Bilderfassungseinheit entsprechen,
den ersten Bildanalysemitteln zweite Bildanalysemittel (30) nachgeschaltet sind, die zum Vergleichen von mittels der Abstandsinformationsdaten ausgewählten oder bestimmten der Bildteilinformationen und/oder mittels der Abstandsinformationsdaten erzeugter Bildsegmentdaten (36) mit vorbestimmten, insbesondere gespeichert vorliegenden Bildmusterdaten ausgebildet sind
und die den zweiten Bildanalysemitteln nachgeschaltete Auswerteeinheit (40) so ausgebildet ist, dass das Anwesenheitserfassungssignal (42) als Reaktion auf ein Ergebnis des Vergleichens, insbesondere ein einem Grad einer Übereinstimmung mit den Musterbilddaten entsprechendes Übereinstimmungssignal (38), erzeugt wird,
**dadurch gekennzeichnet, dass** die ersten Bildanalysemittel (20) zum Zuordnen der den Objekten im Bilderfassungsbereich entsprechenden Bildteilinformationen zu nicht die Erzeugung des Anwesenheitserfassungssignals beeinflussenden Hintergrundbilddaten oder die Erzeugung des Anwesenheitserfassungssignals beeinflussenden Vordergrundbilddaten als Reaktion auf die Abstandsinformationsdaten ausgebildet sind, wobei eine Hintergrund-Subtraktionseinheit (28) der ersten Bildanalysemittel ausgebildet ist, ein aus den Bildaufnahmeeinheiten (12, 14) erzeugtes Doppelbild auf solche Objekte zu reduzieren, die innerhalb eines gewünschten Abstandsbereichs liegen, und
die zweiten Bildanalysemittel (30) Segmentier- und/oder Bildaufbereitungsmittel (32) aufweisen, die zum Erzeugen von aktuellen Bildmusterdaten aus den Vordergrundbilddaten als Grundlage für das Vergleichen mit den vorbestimmten Bildmusterdaten ausgebildet sind.

2. Vorrichtung nach Anspruch 1, **dadurch gekennzeichnet, dass** die Bildaufnahmeeinheiten zum Erfassen jeweils einer Mehrzahl von zeitlich aufeinanderfolgenden, insbesondere kontinuierlich aufeinanderfolgenden und/oder zeitlich synchronen Aufnahmen des Erfassungsbereichs ausgebildet sind.

3. Vorrichtung nach einem der Ansprüche 1 - 2, **dadurch gekennzeichnet, dass** die Bildaufnahmeeinheiten zum Befestigen an einem Stirn-, Kopf- und/oder Deckenbereich eines Raums und/oder an einer Decke oder Wand benachbart einer Tür ausgebildet sind und die Bildmusterdaten einem Kopf- und/oder Oberkörperbereich mindestens einer Person als Anwesenheitsobjekt in dem Erfassungsbereich entsprechen.

4. Vorrichtung nach einem der Ansprüche 1 - 3, **dadurch gekennzeichnet, dass** die Bildmusterdaten, insbesondere die vorbestimmten und gespeichert vorliegenden Bildmusterdaten, einer Mehrzahl von einander benachbart im Erfassungsbereich anwesender Personen als Anwesenheitsobjekt entsprechen.

5. Vorrichtung nach einem der Ansprüche 1 - 4, **dadurch gekennzeichnet, dass** die Auswerteeinheit zum Erzeugen eines Personenzahlsignals und/oder eines Personenpositionssignals aus dem Übereinstimmungssignal ausgebildet ist und das Aktivieren, Deaktivieren bzw. Verändern des Betriebsmodus des Gebäudeaggregats als Reaktion auf und/oder in Abhängigkeit von dem Personenzahlsignal und/oder dem Personenpositionssignal erfolgt.

6. Vorrichtung nach einem der Ansprüche 1 - 5, **gekennzeichnet durch** Einrichte- und/oder Trainingsmittel zum Anpassen und/oder Auswählen der vorbestimmten, gespeichert vorliegenden Bildmusterdaten und/oder zum Einrichten des Vergleichsbetriebs der ersten und/oder der zweiten Bildanalysemittel.

7. Vorrichtung nach einem der Ansprüche 1 - 6, **dadurch gekennzeichnet, dass** die Bilderfassungseinheit mit den Bildaufnahmeeinheiten für ein Infrarotspektrum empfindlich ausgebildet und in einem Gehäuse aufgenommen ist, wobei dem Gehäuse eine auf den Erfassungsbereich gerichtete Infrarot-Beleuchtungsquelle zugeordnet ist.

8. Vorrichtung nach einem der Ansprüche 1 - 7, **dadurch gekennzeichnet, dass** die Steuermittel zur Aufzugsteuerung als Fahrstuhlkabinensteuerung, als Fahrstuhltürsteuerung und/oder als Aufzugnotabschaltung ausgebildet sind, wobei der Betriebsmodus des Gebäudeaggregats insbesondere auch das Anfahren oder Passieren einer Aufzugshalteposition als Reaktion auf das Personenzahldaten und/oder Personenpositionsdaten aufweisende Anwesenheitserfassungssignal umfasst.

9. Vorrichtung nach einem der Ansprüche 1 - 8, **dadurch gekennzeichnet, dass** die Steuermittel (44) zur Beleuchtungssteuerung mit einer Leuchte als Gebäudeaggregat ausgebildet sind, wobei der Betriebsmodus des Gebäudeaggregats insbesondere auch das Verändern des Betriebsmodus der Leuchte als Reaktion auf das Personenzahldaten und/oder Personenpositionsdaten aufweisende Anwesenheitserfassungssignal umfasst.

10. Vorrichtung nach einem der Ansprüche 1 - 9, **dadurch gekennzeichnet, dass** die Steuermittel zur Klima- und/oder Fenstersteuerung mit einem beweglichen Vorhang, Fenster- und/oder Türflügel, Klimaaggregat, Heizaggregat und/oder Lüfter als Gebäudeaggregat ausgebildet sind, wobei der Betriebsmodus des Gebäudeaggregats insbesondere auch von Personenzahldaten und/oder Personenpositionsdaten aufweisenden Anwesenheitserfassungssignal abhängig ist.

## Claims

1. A device for controlling a unit intended for a building having presence detection means (10, 12, 14) and for activating, deactivating and/or changing an operation mode of the unit intended for a building forming control means (44) for the unit intended for a building in response to a presence detection signal (42) of the presence detection means which comprise an image capturing unit (12, 14) directed or able to be directed on a detection area (18) as well as an evaluation unit generating the presence detection signal in response to a presence object detected in the detection area,
the image capturing unit comprising at least two image recording units (12, 14) directed or able to be directed on the shared detection area and distanced to each other about a predetermined distance (A), first image analysis means (20) being switched downstream of the image recording units and being configured such that distance information data is generated from a comparison of partial information of images of the image recording units corresponding to objects in the detection area and corresponds to a distance (B) of the respective object to the image capturing unit,
second image analysis means (30) being switched downstream of the first image analysis means and being configured for comparing the partial information of images selected or determined by means of the distance information data and/or image segment data (36) generated by means of the distance information data to predetermined, in particular saved, image sample data,
and the evaluation unit (40) switched downstream of the second image analysis means being configured such that the presence detection signal (42) is generated in response to a result of the comparison, in particular a conformity signal (38) corresponding to a degree of a conformity with the sample image data,
**characterized in that**
in response to the distance information data, the first image analysis means (20) are configured for allocating the partial information of images corresponding to the objects in the image capturing area to background image data, which do not influence the generation of the presence detection signal, or to foreground image data influencing the generation of the presence detection signal, a background subtraction unit (28) of the first image analysis means being configured for reducing a double image generated from the image recording units (12, 14) to such objects, which are within a desired distance area, and that the second image analysis means (30) comprise segmenting and/or image editing means (32) which are configured for generating up-to-date image sample data from the foreground image data as a basis for the comparison to the predetermined image sample data.

2. The device according to claim 1, **characterized in that** the image recording units are each configured for capturing a plurality of temporally consecutive, in particular continuously consecutive and/or temporally synchronous, recordings of the capturing area.

3. The device according to any one of the claims 1 to 2, **characterized in that** the image recording units are designed for being fixed to a front, head and/or ceiling area of a room and/or to a ceiling or a wall adjacent to a door, and that the image sample data correspond to a head and/or upper body area of at least one person as a presence object in the capturing area.

4. The device according to any one of the claims 1 to 3, **characterized in that** the image sample data, in particular the predetermined and saved image sample data, correspond to a plurality of persons as a presence object, who are present standing next to each other in the capturing area.

5. The device according to any one of the claims 1 to 4, **characterized in that** the evaluation unit is configured for generating a number-of-persons signal and/or a position-of-persons signal from the conformity signal, and that the activation, the deactivation and/or the change of the operation mode of the unit intended for a building is carried out in response to and/or as a function of the number-of-persons signal and/or the position-of-persons signal.

6. The device according to any one of the claims 1 to 5, **characterized by** installation and/or training means for adjusting and/or selecting the predetermined saved image sample data and/or for installing the comparison mode of the first and/or the second image analysis means.

7. The device according to any one of the claims 1 to 6, **characterized in that** the image capturing unit is designed sensitive to an infrared spectrum in conjunction with the image recording units and is received in a casing, to which an infrared illumination source directed to the capturing area is allocated.

8. The device according to any one of the claims 1 to 7, **characterized in that** the control means for controlling the elevator are configured as elevator cab controls, as elevator door controls and/or as elevator emergency shutdown controls, the operation mode of the unit intended for a building in particular also comprising reaching or passing an elevator holding position in response to the presence capturing signal comprising number-of-persons data and/or positions-of-persons data.

9. The device according to any one of the claims 1 to 8, **characterized in that** the control means (44) are designed to have a lamp as a unit intended for a building in order to control illumination, the operation mode of the unit intended for a building in particular also having the change of the operation mode of the lamp in response to the presence capturing signal comprising number-of-persons data and/or position-of-persons data.

10. The device according to any one of the claims 1 to 9, **characterized in that** the control means are configured for controlling climate and/or windows having a movable curtain, a window sash and/or a door leaf, a climate unit, a heating unit and/or a ventilator as a unit intended for a building, the operation mode of the unit intended for a building also being dependent on in particular the presence capturing signal comprising number-of-persons data and/or position-of-persons data.

## Revendications

1. Dispositif pour le contrôle d'une unité prévues pour un bâtiment ayant des moyens de détection de présence (10, 12, 14) et pour l'activation, la désactivation et le change d'un mode d'opération de l'unité prévues pour un bâtiment formant des moyens de contrôle d'unité prévues pour un bâtiment (44) en réponse à un signal de détection de présence (42) des moyens de détection de présence qui comprennent une unité de capture d'image (12, 14) orientée ou capable à être orientée vers une zone de détection (18) ainsi qu'une unité d'évaluation générant un signal de détection de présence en réponse à un objet de présence détecté dans la zone de détection,
l'unité de capture d'image comprenant au moins deux unités d'enregistrement d'image (12, 14) orientées ou capable à être orientées vers la zone de détection commune et espacées les unes des autres autour d'une distance (A) prédéterminée,
des premiers moyens d'analyse d'images (20) étant commutés en aval de l'unité de capture d'image et étant configurés de telle manière que des données d'information de distance sont générées à partir d'une comparaison des informations partielles d'images de l'unité d'enregistrement d'image correspondante à des objets dans la zone de détection, lesdites données d'information de distance correspondant à une distance (B) de l'objet respective de l'unité de capture d'image, des deuxièmes moyens d'analyse d'images (30) étant commutés en aval des premiers moyens d'analyse d'images et étant configurés pour la comparaison des informations partielles d'images choisies ou prédéterminées au moyen des données d'information de distance et/ou des données de segment d'image (36) générées au moyens des données d'information de distance à des données d'échantillon d'image prédéterminées, en particulier stockées,
et l'unité d'évaluation (40) commutée en aval des deuxièmes moyens d'analyse d'images étant configurée de telle manière que le signal de détection de présence (42) est généré en réponse à un résultat de la comparaison, en particulier à un signal de conformité (38) correspondant à un degré d'une conformité avec les données d'image d'échantillon,
**caractérisé en ce qu'**
en réponse aux données d'information de distance, les premiers moyens d'analyse d'images (20) sont configurés pour l'attribution des informations partielles d'images correspondantes aux objets dans la zone de capture d'image aux données d'images de fond ne pas influençant la génération du signal de détection de présence ou aux données d'images de premier plan influençant la génération du signal de capture de présence, une unité de soustraction des images de fond (28) des premiers moyens d'analyse d'images étant configurée pour la réduction d'un image double généré par les unités d'enregistrement d'image (12, 14) à tels objets qui se trouvent dans une zone de distance désirée,
et **en ce que** les deuxièmes moyens d'analyse d'images (30) comprennent des moyens de segmentation et/ou d'édition (32) qui sont configurés pour la génération des données d'échantillon d'image actuelles à partir des données des images de premier plan comme une base pour la comparaison aux données d'échantillon d'image prédéterminées.

2. Dispositif selon la revendication 1, **caractérisé en ce que** les unités d'enregistrement d'image sont chaque configurées pour la capture d'une pluralité d'enregistrements d'une zone de capture temporellement consécutifs, en particulier continuellement consécutifs et/ou temporellement synchrones.

3. Dispositif selon l'une quelconque des revendications 1 à 2, **caractérisé en ce que** les unités d'enregistrement d'image sont configurées pour être fixées à une zone frontale, de tête et/ou de plafond d'une chambre et/ou à un plafond ou à un mur adjacent à une porte, et **en ce que** les données d'échantillon d'image correspondent à une zone de tête et/ou de thorax d'au moins une personne comme un objet de présence dans la zone de capture.

4. Dispositif selon l'une quelconque des revendications 1 à 3, **caractérisé en ce que** les données d'échantillon d'image, en particulier les données d'échantillon d'image prédéterminées et stockées, correspondent à une pluralité de personnes comme un objet de présence, qui sont présentes dans la zone de capture et qui sont adjacentes les unes aux autres.

5. Dispositif selon l'une quelconque des revendications 1 à 4, **caractérisé en ce que** l'unité d'évaluation est configurée pour la génération d'un signal de nombre de personnes et/ou d'un signal de position de personnes à partir du signal de conformité, et **en ce que** l'activation, la désactivation et/ou le change du mode d'opération de l'unité prévues pour un bâtiment est exécuté(e) en réponse au et/ou en fonction du signal de nombre de personnes et/ou du signal de position de personnes.

6. Dispositif selon l'une quelconque des revendications 1 à 5, **caractérisé par** des moyens d'installation et/ou d'entraînement pour ajuster et/ou choisir les données d'échantillon d'image prédéterminées et stockées et/ou pour installer le mode comparaison des premiers et/ou des deuxièmes moyens d'analyse d'images.

7. Dispositif selon l'une quelconque des revendications 1 à 6, **caractérisé en ce que** l'unité de capture d'image est configurée à être sensitive à un spectre infrarouge en combinaison avec l'unité d'enregistrement d'image et est reçues dans un boîtier, auquel une source d'illumination infrarouge orientée vers la zone de capture est attribuée.

8. Dispositif selon l'une quelconque des revendications 1 à 7, **caractérisé en ce que** les moyens de contrôle pour contrôler l'ascenseur sont configurés en tant que contrôles de cabine d'ascenseur, en tant que contrôles de porte d'ascenseur et/ou en tant qu'arrêt d'urgence d'ascenseur, le mode d'opération de l'unité prévues pour un bâtiment en particulier comprend aussi l'arrivée ou le passage d'une position de maintien d'ascenseur en réponse au signal de capture de présence comprenant des données de nombre de personnes et/ou des données de position de personnes.

9. Dispositif selon l'une quelconque des revendications 1 à 8, **caractérisé en ce que** les moyens de contrôle (44) sont configuré pour avoir une lampe en tant qu'unité prévues pour un bâtiment afin de contrôler l'illumination, le mode d'opération de l'unité prévues pour un bâtiment en particulier ayant aussi le change du mode d'opération de la lampe en réponse au signal de capture de présence comprenant des données de nombre de personnes et/ou des données de position de personnes.

10. Dispositif selon l'une quelconque des revendications 1 à 9, **caractérisé en ce que** les moyens de contrôle sont configurés pour contrôler le climat et/ou des fenêtres ayant un rideau déplaçable, un battant et/ou un vantail, une unité de climat, une unité de chauffage et/ou un ventilateur en tant qu'unité prévues pour un bâtiment, le mode d'opération de l'unité prévues pour un bâtiment aussi dépendant en particulier du signal de capture de présence comprenant des données de nombre de personnes et/ou des données de position de personnes.
